# EUROPÄISCHE PATENTANMELDUNG

(11) **EP 4 537 653 A1**
(43) Veröffentlichungstag der Anmeldung: **16.04.2025**
(21) Anmeldenummer: 23202780.5
(22) Anmeldetag: 10.10.2023
(51) Int. Cl.: A01G 7/04, A01G 31/04

(54) **VERFAHREN UND VORRICHTUNGEN ZUR KULTIVIERUNG VON PFLANZEN**

(71) Anmelder: Fraunhofer-Gesellschaft zur Förderung der angewandten Forschung e.V., 80686 München (DE)
(72) Erfinder: REIMANN, Andreas, 47807 Krefeld (DE); VOGEL, Simon, 52074 Aachen (DE)
(74) Vertreter: Roth, Andy Stefan

(57) **Zusammenfassung**

Beschrieben wird ein Verfahren und eine Vorrichtung zur Kultivierung wenigstens einer Pflanze (8), die während einer Wachstumsphase zumindest zeitweise rotiert wird. Die beschriebene technische Lösung zeichnet sich dadurch aus, dass die Pflanze (8) diskontinuierlich rotiert wird, wobei die Pflanze (8) während einer Rotationsphase um eine in Haupterstreckungsrichtung verlaufende Längsachse (28) der Pflanze (8) und/oder um eine senkrecht oder schräg zur Längsachse (28) verlaufende Querachse (29) rotiert wird. Außerdem wird die Pflanze (8) in einer Nichtrotationsphase, in der die Rotationsgeschwindigkeit wenigstens zeitweise auf 0 (Null) verringert wird, zumindest zeitweise derart angeordnet, dass die Längsachse (28) der Pflanze (8) gegenüber einer Lotrichtung (27) am Ort der Pflanze (8) und in einer Ebene, die von der Lotrichtung (27) und der Längsachse (28) aufgespannt wird, geneigt ist.

## Beschreibung

Die Erfindung betrifft ein Verfahren sowie eine Vorrichtung zur Kultivierung, insbesondere zur rotationsvermittelten Modifikation, wenigstens einer Pflanze, die während einer Wachstumsphase zumindest zeitweise rotiert wird, wobei eine Rotation um eine in Haupterstreckungsrichtung der Pflanze verlaufende Längsachse oder Querachse erfolgt.

Seit vielen Jahren sind unterschiedliche Systeme zur automatisierten Pflanzenzucht bekannt, wobei diese insbesondere in den letzten Jahrzehnten zu intensiv genutzten Kultivierungssystemen, vor allem für Gewächshauskulturen, etwa für Tomaten, Gurken und Salate, geworden sind. Die Massenproduktion von landwirtschaftlichen Produkten in vollklimatisierten Gebäuden unter strenger Kontrolle der externen Einflüsse wird auch als sogenanntes "indoor-farming" bezeichnet.

In diesem Zusammenhang ist etwa aus der AT 250728 ein spezielles Gewächshaus bekannt, das in Form eines Turmgewächshauses ausgeführt ist und in dem die zu kultivierenden Pflanzen während ihrer Wachstumsphase bewegt werden. Wesentlich an der beschriebenen technischen Lösung ist, dass die Höhe eines Gebäudes ausgenutzt wird, um eine Förderstrecke für die Pflanzenzucht zu realisieren. Das beschriebene Gewächshaus verfügt über eine Mehrzahl von schlangenförmig angeordneten Förderbändern zum Transport der Pflanzen, wobei das Förderband als Umlaufbahn ausgeführt ist und obere sowie untere Umlenkrollen aufweist, sodass die Pflanzen in unterschiedlicher Richtung vertikal bewegt werden können. Um eine effektive Beleuchtung sicherzustellen sind zwischen den vertikal angeordneten Förderbändern geeignete Leuchtstoffröhren vorgesehen.

Eine weitere technische Lösung zur automatisierten Pflanzenaufzucht wird in der US 2012/0279122 A1 beschrieben. Die beschriebene Anlage verfügt über ein Förderband, das schlangenförmig angeordnet ist und teilweise in vertikaler Richtung verläuft Für die Umlenkung des Förderbandes sind entsprechende Umlenkrollen vorgesehen. Ferner sind für den Transport der Pflanzen spezielle Behälter vorgesehen, in denen sich Trägermaterial zur Aufnahme von Samen oder Pflanzen befindet und die mithilfe spezieller Hakenelemente in das umlaufende Förderband eingehakt werden. Die beschriebenen Behälter zur Aufnahme der Pflanzen erstrecken sich hierbei über die gesamte Breite des Förderbandes und können jeweils eine Mehrzahl von Pflanzen nebeneinander aufnehmen.

Die bekannten automatisierten Systeme zur Pflanzenzucht haben trotz des erhöhten Energiebedarfs eine Reihe von Vorteilen gegenüber der konventionellen Landwirtschaft auf Äckern. Neben einer vollständigen Wetterunabhängigkeit können die klimatischen Verhältnisse im Inneren des Gewächshauses über die gesamte Zeit optimal an die jeweiligen Pflanzen angepasst und so ein konstantes Pflanzenwachstum erreicht werden. Aufgrund spezieller Anlagen zur Wasserrückgewinnung wird darüber hinaus zur Aufzucht der Pflanzen deutlich weniger Wasser als bei der Bewirtschaftung von Äckern im Freien benötigt. Außerdem wird vergleichsweise wenig Dünger benötigt und durch die Pflanzenaufzucht in vollklimatisierten Räumen wird ein pestizidfreier Pflanzenanbau möglich.

Problematisch an den bekannten Systemen zur automatisierten Pflanzenaufzucht in vollklimatisierten Räumen ist oftmals, dass die verwendeten Anlagen nur verhältnismäßig aufwendig an unterschiedliche Pflanzen angepasst werden können. Bei einem Wechsel der angebauten Pflanzen muss berücksichtigt werden, dass sich die Größe verschiedener Pflanzen in der Wachstumsphase in unterschiedlichem Maße und in unterschiedlichen Zeiträumen verändert. Eine Adaption der bekannten Systeme zur automatisierten Pflanzenaufzucht an die jeweils geänderten Bedingungen ist nur schwer möglich.

Nichtsdestotrotz haben die bekannten Systeme, mit denen oftmals auf mehreren Ebenen Pflanzen kultiviert werden (sog. Vertical Farming Systeme) die Möglichkeit eröffnet, den Pflanzenertrag pro verfügbarer Kultivierungsgrundfläche im Vergleich zur klassischen Pflanzenproduktion auf einer Ebene zu vervielfachen. Aufgrund von Limitierungen in der technischen Prozessführung werden bisher allerdings nur kleinere Pflanzen, üblicherweise mit einer Wuchshöhe, die kleiner als 1 m ist, in Vertical Farming Systemen kultiviert. Größere Pflanzen, insbesondere sehr profitable Medizinalpflanzen, wie Cannabis, können bisher nur vergleichsweise ineffizient auf einer Ebene oder auf sehr wenigen Ebenen in Hochregalsystemen mit geringer Pflanzengesamtanzahl pro verfügbarer Kultivierungsgrundfläche produziert werden. Es ist bislang somit nicht möglich, das volle Raumpotential in vertikaler Richtung effizient für die Pflanzenproduktion zu nutzen. Zudem ist die Produktion größerer Pflanzen in sehr wenigen Hochregalebenen mit verschiedenen Nachteilen verbunden. So stellen die Zugänglichkeit, das Monitoring und die Ernte der Einzelpflanzen sowie die Einhaltung der notwendigen klimatischen Kultivierungsbedingungen erhebliche Herausforderungen dar. Darüber hinaus besteht ein technisches Problem darin, den Phänotyp einer Pflanze einfach und effizient zu verändern, um den Pflanzenertrag über den Ansatz der Pflanzendichte pro verfügbarer Kultivierungsgrundfläche hinaus auch auf Einzelpflanzenbasis zu erhöhen, beispielsweise durch Erhöhung der Anzahl der Seitentriebe oder durch Erhöhung der Pflanzenbiomasse.

Eine bekannte Möglichkeit, den Phänotyp einer Pflanze zu verändert besteht in der Nutzung klassischer züchterischer Ansätze. In jüngerer Zeit werden auch spezifische Gen-Editierungen vorgenommen. Diese Ansätze sind allerdings langwierig und schwierig, insbesondere wenn neben den größen- und ertragsspezifischen Merkmalen auch komplexe Wirkstoff-/Sekundärmetabolitkombinationen einer Pflanzenlinie für die Kreuzung berücksichtigt werden müssen. Zudem werden Gen-editierte Pflanzen in verschiedenen Ländern als gentechnisch veränderte Organismen (GVO) angesehen, womit sie gemäß GVO-Richtlinie bewertet werden und aufwendigen Zulassungsverfahren unterliegen.

Des Weiteren werden zur Verringerung der Pflanzenwuchshöhe und zur Erhöhung der Anzahl der Seitentriebe teilweise Chemikalien eingesetzt, die in vielen Anwendungsfällen jedoch nicht erwünscht sind und negative Einflüsse auf die Pflanzengesundheit haben können. Es ist auch bekannt, dass in kontrollierten Indoor-Kultivierungssystemen spezifische Kultivierungsparameter, wie etwa die Verwendung bestimmter Kunstlichtwellenlängenbereiche oder Düngerzusammensetzungen einen Einfluss auf die Größe und den Ertrag einer Pflanze haben können.

All diese Ansätze werden bereits zur Phänotypanpassungen genutzt, sind jedoch nicht zur einfachen und effizienten Modifikation des Phänotyps geeignet

Im Weiteren stellt ein Klinostat ein Gerät dar, mit dem das Wachstum von Pflanzen beeinflussbar ist, indem gezielt der Einfluss der Schwerkraft verändert wird. Durch eine geeignete Rotation der Pflanze lassen sich mit einem Klinostat die Auswirkungen der Schwerkraft auf das Pflanzenwachstum (Gravitropismus) und die Entwicklung (Gravimorphismus) aufheben.

Ein einachsiger oder horizontaler Klinostat verfügt über eine Scheibe, die mit einem Motor verbunden ist Die Scheibe wird senkrecht angeordnet und durch Einsatz eines Elektromotors mit einer Umdrehungszahl von etwa einer Umdrehung pro Minute gedreht. Gleichzeitig wird eine Pflanze an der Scheibe befestigt, so dass diese horizontal ausgerichtet ist Aufgrund der langsamen, kontinuierlichen Drehung erfährt die Pflanze eine über 360 Grad gemittelte Anziehungskraft, was einer schwerelosen Umgebung nahekommt. Befindet sich der Klinostat dagegen in einem Winkel zur Horizontalen, wirkt auf die Pflanze eine Netto-Schwerkraft, deren Größe vom Neigungswinkel abhängt.

Ausgehend von den aus dem Stand der Technik bekannten Systemen zur automatisierten Pflanzenaufzucht und den zuvor erläuterten Problemen liegt der Erfindung die Aufgabe zu Grunde, ein Pflanzenaufzuchtsystem bereitzustellen, mit dem das Pflanzenwachstum gezielt und effektiv beeinflussbar ist. Hierbei sollte es auf vergleichsweise einfache Weise möglich sein, den Phänotyp einer Pflanze gezielt zu modifizieren. Im Weiteren sollte die anzugebende technische Lösung in geschlossenen Räumen einsetzbar sein und auch eine vergleichsweise einfache Integration in einen automatisierten Prozess, der von der Aufbringung eines Samens bis zur Ernte der vollständig ausgereiften Pflanze reichen kann, ermöglichen. Weiterhin sollte die Versorgung der zu kultivierenden Pflanzen mit Wasser sowie Nährstoffen sicherzustellen sein.

Die vorstehende Aufgabe wird mit einem Verfahren zur Kultivierung wenigstens einer Pflanze gemäß Anspruch 1 sowie einer Vorrichtung mit den in Anspruch 11 angegebenen Merkmalen gelöst Vorteilhafte Ausführungsformen der Erfindung sind Gegenstand der abhängigen Ansprüche und werden in der folgenden Beschreibung unter teilweiser Bezugnahme auf die Figuren näher erläutert

Die Erfindung betrifft ein Verfahren zur Kultivierung wenigstens einer Pflanze, die während einer Wachstumsphase zumindest zeitweise rotiert wird. Das erfindungsgemäße Verfahren zeichnet sich dadurch aus, dass die Pflanze diskontinuierlich rotiert wird, wobei die Pflanze während einer Rotationsphase um eine in Haupterstreckungsrichtung verlaufende Längsachse der Pflanze und/oder um eine senkrecht oder schräg zur Längsachse verlaufenden Querachse rotiert wird und die Pflanze in einer Nichtrotationsphase, in der die Rotationsgeschwindigkeit wenigstens zeitweise auf 0 (Null) verringert wird, zumindest zeitweise derart angeordnet wird, dass die Längsachse der Pflanze gegenüber einer Lotrichtung am Ort der Pflanze und in einer Ebene, die von der Lotrichtung und der Längsachse aufgespannt wird, geneigt ist.

Bei der Lotrichtung handelt es sich um die örtliche Richtung der Schwerebeschleunigung, die senkrecht auf den Niveauflächen des Erdschwerefeldes in Richtung der Resultierenden aus der Gravitation der Erde und der Fliehkraft durch die Erdrotation steht. Als vereinfachende Annahme kann man davon ausgehen, dass die Lotrichtung von einem Punkt oberhalb der Erdoberfläche zum Erdmittelpunkt gerichtet ist. Die Lotrichtung verläuft daher vertikal zur Erdoberfläche bzw. zum Untergrund am Aufstellungsort der zu kultivierenden Pflanze. Im Weiteren ist es wesentlich, dass die Rotation der Pflanze diskontinuierlich erfolgt, also Rotationsphasen, in denen die Pflanze um ihre Längsachse und/oder quer oder schräg zu ihrer Längsachse gedreht wird, und Nichtrotationsphasen, in denen zumindest zeitweise keine Drehbewegung erfolgt, die Rotationsgeschwindigkeit somit auf 0 (Null) reduziert wird, initiiert werden.

Mithilfe der Erfindung lässt sich die zu kultivierende Pflanze zur rotationsbasierten Modifikation des Pflanzenphänotyps während des Wachstums anregen. Wesentlich ist, dass die Pflanze außerhalb der Lotrichtung zum Schwerefeld der Erde wächst, also die Schwerkraft in unterschiedlichem Winkel auf die Pflanze wirkt und aufgrund der diskontinuierlichen Rotation der Pflanze um ihre in Haupterstreckungsrichtung verlaufende Längsachse und/oder um eine senkrecht oder schräg zur Längsachse verlaufenden Querachse abwechselnd verschiedene Pflanzenstängelseiten zum Schwerefeld der Erde ausgerichtet werden. Die Rotation erfolgt diskontinuierlich, wird somit in den Nichtrotationsphasen gestoppt, wodurch mindestens einer der folgenden Pflanzenphänotypen im Vergleich zum Wachstum einer Pflanze ohne erfindungsgemäß vorgesehene Rotation induziert wird:
- kürzere Wuchshöhe bei überwiegend geradem Stängel
- kürzere Wuchshöhe bei wellenförmigem Stängel
- verringerter Internodienabstand
- höhere Internodienanzahl
- mehr Seitentriebe
- größere Stängeldicke
- mehr Blattbiomasse
- mehr Wurzelbiomasse
- mehr Anlagen zur Blütenbildung

Die Erfindung nutzt hierbei die Erkenntnis, dass eine Pflanze nur dann auf die Schwerkraft reagiert, wenn die Schwerkraftanregung länger als eine kritische Zeitspanne aufrechterhalten wird, die so genannte minimale Präsentationszeit (MPT). Bei vielen Pflanzenorganen liegt die MPT zwischen 10 und 200 Sekunden. Die Nichtrotationsphasen werden daher auf vorteilhafte Weise bei der Realisierung des erfindungsgemäßen Verfahrens derart gewählt, dass bei der wenigstens einen, zumindest zeitweise rotierten Pflanze eine gravitropische Reaktion erreicht wird. Hierbei kann berücksichtigt werden, dass die Präsentationszeit kumulativ ist, sodass bei wiederholter Unterbrechung der Rotationsbewegung in der gleichen Position, selbst wenn die Nichtrotationsphase nur sehr kurz ist, bei ausreichend oft erfolgender Wiederholung der Rotationsunterbrechung in gleicher Position eine gravitropische Reaktion herbeiführbar ist Im Gegensatz zum Wachstum einer dauerhaft statisch ausgerichteten Pflanze mit dauerhaft induzierter gravitropischer Reaktion ermöglicht die Erfindung eine gerichtete, diskontinuierliche gravitropische Reaktion in verschiedenen Pflanzenbereichen, die zu den oben beschriebenen unerwarteten Phänotypen führt

Gemäß einer besonderen Ausführungsform der Erfindung ist vorgesehen, dass die wenigstens eine bewegte Pflanze zumindest erfindungsgemäß diskontinuierlich um ihre Längsachse und/oder eine senkrecht oder schräg zur Längsachse verlaufende Querachse gedreht wird.

Auf diese Weise lässt sich auf vorteilhafte Weise eine Rotation und/oder Bewegung der Pflanze in wenigstens einer Ebene realisieren. Die in unterschiedlichen Ebenen durchgeführten Drehbewegungen und/oder Linearbewegung können zumindest teilweise zeitgleich oder zu unterschiedlichen Zeitpunkten bzw. in unterschiedlichen Zeiträumen erfolgen. Generell unerheblich ist der für die Drehbewegung gewählte Radius der Kreisbahn, auf der die Drehbewegung erfolgt.

Besonders bevorzugt ist es denkbar, dass die Bewegung, die eine Drehung der Pflanze um eine zur Längsachse senkrecht oder schräg zur Längsachse verlaufende Querachse auf einem spezifischen Streckenabschnitt einer Förderstrecke erfolgt, etwa an einem Umkehr- oder Wendepunkt einer ansonsten zumindest teilweise geradlinigen Förderstrecke, entlang der ein Förderband bewegt wird. So ist es etwa denkbar, dass die Pflanze während sie diskontinuierlich, also in generell frei wählbaren Zeitabständen um ihre in Haupterstreckungsrichtung der Pflanze verlaufende Längsachse gedreht wird, sodass insgesamt Rotations- sowie Nichtrotationsphasen vorgesehen sind, entlang einer Förderstrecke bewegt wird und zumindest zeitweise um eine senkrecht oder schräg zur Längsachse verlaufende Querachse gedreht wird. Besonders bevorzugt verläuft die Querachse zumindest nahezu senkrecht zur Längsachse der Pflanze.

In einer speziellen Ausführungsform der Erfindung ist vorgesehen, dass zumindest zeitweise während einer Wachstumsphase der bewegten Pflanze die Nichtrotationsphasen einer Drehbewegung um die in Haupterstreckungsrichtung der Pflanze verlaufende Längsachse und/oder um eine senkrecht oder schräg zur Längsachse verlaufende Querachse mindestens so lang sind, wie die Rotationsphasen. Hierbei handelt es sich bei den Nichtrotationsphasen wiederum um Zeiträume, in denen die Rotationsgeschwindigkeit der Drehbewegung auf 0 (Null) abgesenkt wird. Weiterhin ist es auch denkbar, dass die Nichtrotationsphasen länger als die Rotationsphasen sind, bspw. einen 2- bis 4-fachen oder noch größeren Wert annehmen.

Ferner ist bei einer vorteilhaften Ausgestaltung der Erfindung vorgesehen, dass eine erste Seite eines in der Haupterstreckungsrichtung der Pflanze verlaufenden Hauptstängels in zumindest zwei Nichtrotationsphasen gleich relativ zur Lotrichtung ausgerichtet wird. Der Hauptstängel wird somit in wenigstens zwei Nichtrotationsphasen, die vorzugsweise nur durch eine Nichtrotationsphase unterbrochen sind, derart ausgerichtet, dass unterschiedliche Hauptstängelseiten dem Untergrund bzw. der Erdoberfläche oder dem Erdmittelpunkt zugewandt sind.

Gemäß einer besonders geeigneten Ausführungsform der Erfindung ist vorgesehen, dass eine erste und eine zweite Seite eines in der Haupterstreckungsrichtung der Pflanze verlaufenden Hauptstängels, die gegenüberliegend am Hauptpflanzenstängel angeordnet sind, derart rotiert werden, dass in einer zweiten Nichtrotationsphase, die unterbrochen von einer Rotationsphase einer ersten Rotationsphase folgt, die erste Seite die Position einnimmt, die die zweite Seite in der ersten Nichtrotationsphase innehatte. Gemäß dieser Ausführungsform werden somit gegenüberliegende Seiten des Hauptstängels derart ausgerichtet, dass gegenüberliegende Hauptstängelseiten abwechselnd dem Untergrund bzw. der Erdoberfläche oder dem Erdmittelpunkt zugewandt sind

In einer weiteren Ausführungsform sind beide Pflanzenstängel eines Paares von Pflanzenstängeln, die an gegenüberliegenden Stellen von einem in der Haupterstreckungsrichtung der Pflanze verlaufenden Hauptstängel abzweigen, in unterschiedlichen Nichtrotationsphasen mit ihrer Haupterstreckungsrichtung jeweils in Lotrichtung ausgerichtet werden. So ist es etwa denkbar, dass in einer ersten Nichtrotationsphase der erste Stängel des Paares von Pflanzenstängeln in Lotrichtung, vorzugsweise in Richtung des Untergrundes hängend, und in einer zweiten Nichtrotationsphase der zweite Pflanzenstängel des Paares von Pflanzenstängels in Lotrichtung, vorzugsweise in Richtung des Untergrundes hängend, angeordnet wird. Es werden somit gegenüberliegend an einem Hauptstängel angeordnete und von diesem abzweigende Pflanzenstängel abwechselnd in Lotrichtung angeordnet.

Im Weiteren ist es auf vorteilhafte Weise denkbar, dass die diskontinuierlich rotierte Pflanze zumindest zeitweise derart angeordnet wird, dass die in Haupterstreckungsrichtung verlaufende Längsachse einen Winkel α zur Lotrichtung einschließt, wobei für den Winkel α gilt: -90° < α < 90°. Gemäß dieser Ausführungsform ist die Längsachse der Pflanze bei einem Winkel α=0° horizontal, also zumindest nahezu parallel zum Untergrund bzw. dem Erdboden angeordnet, während bei einem Winkel α, für den -90° < α < 0° gilt, die Pflanzenspitze in Richtung des Erdbodens geneigt und bei einem Winkel, für den 0 < α < 90° gilt, die Pflanzenspitze schräg nach oben ausgerichtet ist. Erfindungswesentlich ist hierbei stets, dass die Längsachse der zu kultivierenden Pflanze in Nichtrotationsphasen zumindest zeitweise in einer Ebene, die von der Lotrichtung und der Längsachse aufgespannt wird, gegenüber der Lotrichtung geneigt ist, die Längsachse somit nicht vertikal zum Untergrund bzw. der Erdoberfläche angeordnet wird.

In einer weiteren speziellen Ausgestaltung des erfindungsgemäßen Verfahrens wird die Pflanze zumindest zeitweise während der Nichtrotationsphasen mit ihrer in Haupterstreckungsrichtung verlaufenden Längsachse senkrecht zur Lotrichtung angeordnet. Dies bedeutet, dass die Längsachse in horizontaler Richtung und damit zumindest nahezu parallel zum Untergrund bzw. zur Erdoberfläche angeordnet ist

Darüber hinaus ist bei einer speziellen Weiterbildung des erfindungsgemäßen Verfahrens vorgesehen, dass eine Nichtrotationsphase zumindest teilweise 10 bis 200 s beträgt. Eine Zeitspanne, die in dem zuvor genannten Intervall liegt, bietet den Vorteil, dass bei der Pflanze auf effektive Weise eine gravitropische Reaktion erzeugbar ist

Das zuvor beschriebene Verfahren in seiner allgemeinen Form oder wenigstens einer der zuvor beschriebenen speziellen Weiterbildungen ist besonders zur Kultivierung einer Medizinalpflanze, einer Nahrungspflanze, einer Futterpflanze, einer Zierpflanze und/oder einer verholzenden Pflanze geeignet. Bevorzugt werden eine Mehrzahl derartiger Pflanzen zumindest zeitweise gleichzeitig mit dem erfindungsgemäßen Verfahren kultiviert

Ganz besonders bevorzugt eignet sich das Verfahren gemäß der Erfindung oder wenigstens einer seiner zuvor beschriebenen speziellen Weiterbildungen zur Kultivierung von einer Medizinalpflanze oder einer Mehrzahl von Medizinalpflanzen, die zur Familie der Cannabaceae gehören.

Zusätzlich zu einem Verfahren betrifft die Erfindung auch eine Vorrichtung zur Durchführung des erfindungsgemäßen Verfahrens und/oder seiner Weiterbildungen, wobei die Vorrichtung zumindest eine Befestigungsvorrichtung zur lösbaren Befestigung der zu kultivierenden Pflanze und eine Antriebseinheit, die wenigstens mittelbar mit der Befestigungsvorrichtung zur Initiierung einer Bewegung der Befestigungsvorrichtung verbunden ist, aufweist. Gemäß einer speziellen Weiterbildung der Vorrichtung sind die Befestigungsvorrichtung und/oder die Antriebseinheit ausgeführt, um die zu kultivierende Pflanze in wenigstens zwei Ebenen zu bewegen, wobei diese Ebenen weder identisch noch parallel zueinander angeordnet sind.

Generell ist es hierbei denkbar, dass die der Befestigung der zu kultivierenden Pflanze dienende Befestigungsvorrichtung linear bewegbar und/oder rotierbar ist

Gemäß einer speziellen Ausgestaltung ist ferner eine Nährmediumversorgung vorgesehen, mit der die zu kultivierende Pflanze mit einem Nährmedium versorgbar ist Die Nährmediumversorgung verfügt hierbei über die geeigneten Elemente zur Aufnahme, Bevorratung, Förderung und Ausbringung des erforderlichen Nährmediums in Richtung der zumindest diskontinuierlich um ihre Längsachse und/oder um eine senkrecht oder schräg zur Längsachse verlaufende Querachse rotierten Pflanze.

Im Weitern ist es vorteilhaft, wenn eine Lichtquelle vorgesehen ist, um die zu kultivierende Pflanze zumindest zeitweise mit Photonen zu bestrahlen. Gemäß dieser Ausführungsform ist als Lichtquelle Sonnenlicht oder wenigstens eine Beleuchtungseinheit vorgesehen, mit der die Pflanze gezielt bestrahlt wird. Es können Abschattungselemente vorgesehen sein, die eine gezielte Verdunkelung der Pflanze bewirken oder aber die Bestrahlung kann gezielt ein- und ausgeschaltet werden, etwa um einen Tag-Nacht-Rhythmus zu definieren.

Eine weitere Ausführungsform der erfindungsgemäßen Vorrichtung sieht den Einsatz einer Klimatisiereinrichtung vor, um die zu kultivierende Pflanze und/oder eine die Pflanze umgebende Atmosphäre bedarfsgerecht einzustellen, insbesondere im Vergleich zur Umgebung zu kühlen und/oder zu entfeuchten.

Im Weiteren ist es denkbar, dass die Erfindung, die auf der diskontinuierlichen Rotation einer zu kultivierenden Pflanze um eine in Haupterstreckungsrichtung der Pflanze verlaufende Längsachse und/oder um eine senkrecht oder schräg zur Längsachse verlaufende Querachse beruht, mit einer Vorrichtung zur Förderung des Wachstums von Pflanzen, insbesondere zur automatisierten Pflanzenaufzucht, mit einem entlang einer Förderstrecke bewegbaren Förderband zum wenigstens abschnittsweisen Transport von Pflanzen kombiniert wird. Die so transportierten Pflanzen werden bevorzugt während der Bewegung entlang der Förderstrecke zumindest zeitweise beleuchtet sowie von einer Nährstoffversorgung mit Nährstoffen und Wasser versorgt und werden während ihrer Förderung entlang der Förderstrecke in wenigstens einem ersten Abschnitt zumindest annähernd horizontal und in wenigstens einem zweiten Abschnitt zumindest annähernd vertikal bewegt. Während dieser abwechselnd horizontalen und vertikalen Bewegung werden die Pflanzen ebenso diskontinuierlich um ihre Längsachse und/oder um eine senkrecht oder schräg zur Längsachse verlaufende Querachse gedreht. Diese Ausführungsform der Erfindung zeichnet sich dadurch aus, dass die Pflanzen zumindest zeitweise während des Transports entlang der Förderstrecke derart relativ zum Förderband fixiert sind, dass Wurzeln der Pflanzen zumindest teilweise in einen unterhalb einer Unterseite des Förderbandes angeordneten Bereich hineinragen, während Blätter und/oder Früchte der Pflanzen wenigstens teilweise in einen Bereich, der sich oberhalb einer der Unterseite gegenüberliegenden Oberseite des Förderbandes befindet, hineinragen, wobei unterhalb des Förderbandes eine Nährmediumversorgung angeordnet ist, sodass die auf dem Förderband fixierten Pflanzen, insbesondere die Wurzeln unterhalb des Förderbandes, aeroponisch mit Nährmedium versorgt werden. Mit Hilfe des Förderbandes kann somit im Bereich von Umlenkstellen mit horizontaler Drehachse eine Rotation der zu kultivierenden Pflanze um die senkrecht zur Längsachse der Pflanze verlaufende Querachse erfolgen. Grundsätzlich denkbar ist auch eine Kombination, sodass auf dem Förderband auch eine diskontinuierliche Rotation der Pflanze um ihre Längsachse bewirkt werden kann. Besonders geeignet für eine diskontinuierliche Rotation einer Pflanze um ihre Längsachse sind allerdings Klinostaten.

In diesem Zusammenhang sind wesentliche Merkmale der Erfindung, dass die Pflanzen während ihrer Wachstumsphase auf dem Förderband fixiert sind, kontinuierlich in eine Richtung bewegt und diskontinuierlich um ihre Längsachse und/oder um eine senkrecht oder schräg zur Längsachse verlaufende Querachse gedreht werden. Vorzugweise werden die Pflanzen zumindest zeitweise entlang einer Lichtquelle transportiert. Weiterhin ist es denkbar, dass sich beabstandet zur Unterseite des Förderbandes eine Nährmediumsversorgung, insbesondere mit Sprühdüsen, befindet, die in diesem Bereich eine aeroponische Versorgung der Pflanzen mit Nährmedium gewährleistet. Weiterhin wird der Wurzelbereich während der Bewegung, vorzugsweise kontinuierlich mit Nährstoffen versorgt. Aufgrund der speziellen Anordnung der Förderstrecke gemäß dieser Ausführungsform mit zumindest annähernd vertikal in Aufwärts- sowie Abwärtsrichtung verlaufenden Streckenabschnitten, zwischen denen Umkehrpunkte der Förderstrecke angeordnet sind, werden die Pflanzen nicht nur diskontinuierlich um ihre Längsachse und/oder um eine senkrecht oder schräg zur Längsachse verlaufende Querachse gedreht, sondern es erfolgt insbesondere im Bereich der Umkehrpunkte eine Drehung um die dann senkrecht oder schräg zur Längsachse verlaufende Querachse, wobei die Längsachse einer Pflanze bevorzugt senkrecht zur Querachse angeordnet ist

In einer weiteren speziellen Ausführungsform der Erfindung verfügt das Förderband wenigstens bereichsweise über ein Trägermaterial, in dem die Pflanzen zumindest zeitweise während des Transports entlang der Förderstrecke fixiert sind. Vorzugsweise wird das Trägermaterial derart gewählt, dass die Samen oder Pflanzen guten Halt finden und das Material darüber hinaus Wasser und/oder Nährmedium weiterleiten und zumindest zeitweise speichern kann. Die diskontinuierliche Rotation der Pflanze um ihre Längsachse und/oder um eine senkrecht oder schräg zur Längsachse verlaufende Querachse findet dann bevorzugt zumindest teilweise mitdem Trägermaterial statt

Werden die Pflanzen zusätzlich zur diskontinuierlichen Rotation um ihre Längsachsen und/oder um ihre senkrecht oder schräg zur Längsachse verlaufenden Querachsen mit einer speziell ausgeführten Vorrichtung zumindest teilweise in annähernd vertikaler Richtung transportiert, ist es möglich, dass gemäß einer besonderen Weiterbildung der Erfindung die Pflanzen während ihrer Wachstumsphase kontinuierlich entlang einer natürlichen oder künstlichen Beleuchtungsquelle und/oder auf diese zu bewegt werden, wobei die Beleuchtung besonders bevorzugt erfolgt, sobald die Pflanzen in vertikaler Richtung bewegt werden. Auf vorteilhafte Weise wird gleichzeitig ein auf der Unterseite des Förderbandes angeordneter Wurzelbereich aeroponisch mit Nährstoffen und Feuchtigkeit versorgt. Auch die areoponische Versorgung des Wurzelbereichs mit Nährstoffen erfolgt vorzugsweise zumindest zeitweise, während die Pflanzen in vertikaler Richtung bewegt werden. In diesem Zusammenhang ist es denkbar, dass zwischen zwei vertikal verlaufenden Abschnitten der Förderstrecke ein oberer Umlenkpunkt vorgesehen ist, sodass die Pflanzen mit dem Förderband in vertikaler Richtung nach oben und anschließend nach Umlaufen des Umlenkpunktes in vertikaler Richtung nach unten bewegt werden. An diesem Umlenkpunkt findet somit auf vorteilhafte Weise eine zur diskontinuierlichen Rotation der Pflanzen um ihre Längsachse eine zusätzliche Drehung der Pflanze um eine senkrecht oder schräg zur Längsachse verlaufende Querachse der Pflanzen statt Besonders vorteilhaft ist es, wenn Pflanzen mit ihrer Längsachse senkrecht zur Bewegungsrichtung des Förderbandes angeordnet sind.

Generell ist es denkbar, dass zur Beleuchtung natürliches und/oder mittels einer Beleuchtungseinheit, die bspw. wenigstens eine Leuchtstoffröhre und/oder eine LED aufweist, künstlich erzeugtes Licht verwendet wird. Das Vorsehen einer Beleuchtungseinheit zur Erzeugung von Licht hat den Vorteil, dass die Beleuchtung gezielt, insbesondere angepasst an die zu züchtende Pflanzenart, und/oder das Pflanzenwachstum abgestimmt, und bei Bedarf zu jeder Zeit erfolgen kann. Gemäß einer besonderen Weiterbildung der Erfindung erfolgt die Beleuchtung der Pflanzen lediglich in bestimmten Bereichen der Förderstrecke, insbesondere in ausgewählten Bereichen, in denen die Pflanzen in vertikaler Richtung bewegt werden und ganz besonders bevorzugt in der Hälfte der insgesamt vorgesehenen vertikalen Bereiche, so dass ein Tag-Nacht-Rhythmus imitiert werden kann. Auf vorteilhafte Weise erfolgt die Beleuchtung mit vertikal angeordneten LED-Paneelen oder anderen Beleuchtungssystemen.

Gemäß einer speziellen Weiterbildung ist ferner vorgesehen, dass die Beleuchtungseinheit derart ausgeführt ist, dass eine Beleuchtung der Pflanzen in gezielt ausgewählten Abschnitten der Förderstrecke stattfindet. Auf vorteilhafte Weise findet die Beleuchtung statt, während die Pflanzen zusätzlich zur diskontinuierlichen Rotation um die in Haupterstreckungsrichtung der Pflanzen verlaufende Längsachse und/oder um eine senkrecht oder schräg zur Längsachse verlaufende Querachse kontinuierlich oder ebenfalls diskontinuierlich auf einem vertikal angeordneten Abschnitt der Förderstrecke nach oben bewegt werden. Weiterhin ist es vorteilhaft, dass die Pflanze nach Umlaufen des Umlenkpunktes, insbesondere sobald sie sich in vertikaler Richtung nach unten bewegt werden, zumindest zeitweise nicht mehr beleuchtet werden.

In einer besonders vorteilhaften Ausführungsform werden die auf dem Förderband fixierten Pflanzen, insbesondere die Wurzeln unterhalb des Förderbandes, aeroponisch mit Nährmedium versorgt, sobald sie in vertikaler Richtung bewegt werden. Sofern die Förderstrecke auch im unteren Bereich einen Umlenkpunkt zwischen zwei zumindest annähernd vertikal verlaufenden Förderstreckenabschnitten aufweist, ist es denkbar, dass die Pflanzen, insbesondere die unterhalb des Förderbandes angeordneten Wurzeln, zumindest teilweise durch ein Tauchbad bewegt werden, sodass in diesem Bereich eine hydroponische Nährstoffversorgung der Pflanzen, insbesondere des Wurzelwerks erfolgt. Auf der gemäß dieser speziellen Ausführungsform schlangen- bzw. mäanderförmig ausgebildeten Förderstrecke mit vertikal verlaufenden Streckenabschnitten, zwischen denen sich untere und obere Umlenkpunkte oder -bereiche befinden, findet auf diese Weise eine kontinuierliche Versorgung der Pflanzen mit Nährstoffen und Feuchtigkeit statt. Für die aeroponische Bewässerung des Wurzelwerks der Pflanzen wird bevorzugt eine Nährmedium-Vernebelungsanlage eingesetzt

Mithilfe eines wie vorgeschrieben ausgeführten automatisierten Systems zur Pflanzenaufzucht ist es auf bevorzugte Weise möglich, auf der Unterseite des Förderbandes eine stetige aeroponische Bewässerung der Wurzeln vorzusehen, während im Bereich der unteren Umlenkpunkte ein hydroponisches Bad des Pflanzenträgermaterials beim Durchlaufen der Talphase des Förderbandes realisiert wird.

Durch die Fixierung der diskontinuierlich um ihre Längsachse und/oder um eine senkrecht oder schräg zur Längsachse verlaufende Querachse rotierten Pflanzen auf dem Förderband lässt sich eine permanente oder zumindest über lange Zeiträume andauernde aeroponische Bewässerung realisieren, ohne dass das Blattwerk der Pflanze unnötig befeuchtet wird. Auf diese Weise werden Erkrankungen der Blattmasse zuverlässig verhindert. Die insbesondere auf den vertikalen Förderstreckenabschnitten unterhalb des Förderbandes befindliche Atmosphäre wird in Bezug auf die Temperatur und die Luftfeuchtigkeit mittels einer Sensorik überwacht und die Werte auf geeignete Weise über eine zentrale Steuereinheit geregelt, sodass eine zu hohe Luftfeuchtigkeit in diesem Bereich zuverlässig vermieden werden kann.

Weiterhin ist es alternativ oder in Ergänzung zu der zuvor beschriebenen Ausführungsform auf vorteilhafte Weise denkbar, die Anpassung einer Vorrichtung zur automatisierten Pflanzenaufzucht an den Größenbedarf der jeweiligen Pflanzen durch eine Veränderung des Abstandes der Punkte, an denen die einzelnen Pflanzen auf dem Förderband fixiert und an denen Elemente zur gezielten und bedarfsgerechten Rotation der Pflanzen um ihre Längsachsen und/oder um ihre senkrecht oder schräg zur Längsachse verlaufenden Querachsen angeordnet sind, zu erreichen. Vorzugsweise sind hierfür mechanische Elemente vorgesehen, die eine bedarfsgerechte Einstellung des Abstandes der einzelnen Fixierungspunkte und damit der in diesem Bereich vorgesehenen Rotationselemente gewährleisten. So ist es etwa denkbar, dass die einzelnen Fixierungspunkte mit zunehmender Transportdauer einer Pflanze und dem damit einhergehenden Pflanzenwachstum weiter auseinandergezogen werden, wobei Raststellungen in verschiedenen Stellungen denkbar sind. Gemäß einer weiteren bevorzugten Ausführungsform der Erfindung verfügt das Förderband über aneinandergereihte steife Lamellen oder Platten, welche aus unterschiedlichsten Materialen, wie etwa Polyvinylchlorid (PVC) hergestellt sein können. Derartige Lamellen oder Platten ermöglichen eine einfache Verankerung der Pflanzen und zeichnen sich gleichzeitig durch ein hohes Maß an Flexibilität aus, sodass das Förderband sich über die Umlenkrollen führbar ist

Durch diese Anpassung der Förderstrecke bzw. des Förderbandes an die sich verändernde Größe der Pflanzen wird einerseits dem steigenden Platzbedarf der Pflanze Rechnung getragen und andererseits der Einsatz von Material und Energie minimiert. Auf diese Weise wird die Anlage sowohl unter ökonomischen als auch unter ökologischen Gesichtspunkten besonders effektiv betrieben, da beispielsweise der Aufwand in der Jungpflanzenphase für Bewässerung- und Beleuchtung deutlich verringert wird.

Eine weitere spezielle Ausgestaltung der Erfindung sieht vor, dass die Förderstrecke bzw. das entlang der Förderstrecke bewegte Förderband auf einer geschlossenen Kreis- oder Ovalbahn bewegt wird. Es sind somit zwei vertikale Abschnitte sowie zwei horizontale Abschnitte im Bereich der Umlenkpunkte vorgesehen, die die vertikalen Abschnitte miteinander verbinden. Durch Veränderung der Länge der vertikalen Abschnitte des Förderbandes kann eine derartige Pflanzenaufzuchtanlage zumindest nahezu beliebig in die Höhe gebaut werden. Bevorzugt ist eine innenliegende aeroponischer Nährstoffversorgung zur Kultivierung der bewegten Pflanzen vorgesehen. Eine derartige Pflanzenaufzuchtanlage eignet sich ganz besonders für die Aufzucht von Kräutern, Blattgemüse, Fruchtpflanzen inklusive Körnerleguminosen, Futterpflanzen, Zierpflanzen, verholzenden Pflanzen und/oder von Medizinalpflanzen, insbesondere solchen, die zur Familie der Cannabaceae gehören. Auch bei einer Bewegung entlang einer geschlossenen kreisförmigen oder ovalen Förderstrecke werden die Pflanzen ebenso diskontinuierlich um ihre Längsachse und/oder um eine senkrecht oder schräg zur Längsachse verlaufende Querachse gedreht, sodass die Pflanzen zumindest teilweise während der Nichtrotationsphasen derart ausgerichtet sind, dass ihre Längsachse nicht in Lotrichtung verläuft

Eine vorteilhafte Ernte ist möglich, sofern die Ernte der Pflanzen oder Früchte im Bereich des unteren Umkehrpunktes, insbesondere mit Hilfe einer automatisiert arbeitenden Erntemaschine, erfolgt

In Bezug auf die Fixierung der Pflanzen im oder am Förderband, ist es grundsätzlich denkbar, dass die Samen und/oder Jungpflanzen direkt oder mittelbar über ein Trägermaterial im oder am Förderband fixiert werden. Wesentlich ist stets, dass Elemente vorgesehen sind, die die erfindungsgemäße diskontinuierliche Rotation der Pflanzen um ihre Längsachse und/oder um eine senkrecht oder schräg zur Längsachse verlaufende Querachse der Pflanzen ermöglichen.

Gemäß einer alternativen Ausführungsform verfügt das Förderband über geeignete Pflanzenbehälter, die mit Pflanzen bestückt werden können und die mit Hilfe von Befestigungselementen am umlaufenden Förderband befestigt werden. In diesem Zusammenhang ist es etwa denkbar, dass das Förderband wenigstens eine Förderkette aufweist, in die ein als Befestigungselement dienender Haken des Pflanzenbehälters eingehängt wird, sobald eine Pflanze entlang der Förderstrecke transportiert werden soll. Werden entsprechend mit dem Förderband verbindbare Pflanzenbehälter eingesetzt, so werden diese vorzugsweise zum Erntevorgang von dem Förderband bzw. der Förderkette gelöst, nach Abschluss der Ernte gereinigt und schließlich wieder der Bestückungsanlage zugeführt. Nach Bestückung mit einem Samen oder einer Jungpflanze werden entsprechende Pflanzenbehälter wiederum am Anfang des Förderbandes bzw. der Förderkurse in diese eingehängt.

Mithilfe der Erfindung wird eine Kultivierung von Pflanzen ermöglicht, bei der der Phänotyp einer Pflanze während der Kultivierung allein durch den Wechsel der Ausrichtung der Pflanze, insbesondere ihres Hauptpflanzenstängels zum Schwerefeld der Erde modifiziert wird. Hierbei wird die initiale Ausrichtung einer Pflanze mit ihrem sich in Richtung der Pflanzenlängsachse erstreckenden Hauptpflanzenstängel gegenüber dem Untergrund und damit zum Schwerefeld der Erde während der Kultivierungsdauer mindestens einmal durch eine diskontinuierliche Rotation derart verändert, dass das Zeitintervall zwischen den Rotationsbewegungen, also eine Nichtrotationsphase, länger ist, als die längste Rotationsbewegung während einer Rotationsphase. Die Änderung der Ausrichtung der Pflanze mit ihrem Hauptpflanzenstängel zum Schwerefeld der Erde führt dazu, dass unterschiedliche Seiten des Hauptpflanzenstängels dem Untergrund zugewandt sind, und kann durch Rotation um die in Haupterstreckungsrichtung verlaufende Pflanzenlängsachse und/oder um eine senkrecht oder schräg zur Längsachse verlaufende Pflanzenquerachse erfolgen.

Bei Rotation um eine Pflanzenquerachse werden vorzugsweise jeweils die gegenüberliegenden Seiten des Hauptpflanzenstängels abwechselnd dem Untergrund zugewandt ausgerichtet. Bei einer Rotation um die Pflanzenlängsachse und/oder um eine senkrecht oder schräg zur Längsachse verlaufenden Querachse der Pflanze lässt sich auf vorteilhafte Weise die dem Untergrund zugewandte Ausrichtung einer Seite oder eines Bereichs des Hauptpflanzenstängels in Abhängigkeit des verwendeten Rotationswinkels einstellen, wobei der bevorzugte Rotationswinkel der Drehbewegung während einer Rotationsphase 180° beträgt, um so technische Merkmale bei minimaler Anzahl von Rotationen initiieren zu können. Während der Kultivierung zwischen den Rotationsphasen, also während der Nichtrotationsphasen, befindet sich die Längsachse der zu kultivierenden Pflanze in einer nicht parallelen Ausrichtung zur Lotrichtung, verläuft somit in einer anderen Richtung als der Schwerkraftvektor der Erde. Gemäß dieser Ausführungsform schließen die Längsachse der zu kultivierenden Pflanze und der Schwerkraftvektor einen Winkel ein, der ungleich 0 (Null) ist Die Längsachse der zu kultivierenden Pflanze ist somit gegenüber dem Schwerkraftvektor geneigt

Überraschend ist bei Einsatz der Erfindung beobachtet worden, dass eine sich verändernde Ausrichtung der Pflanzenlängsachse zum Schwerkraftvektor, wobei nach einer Bewegung der Pflanzen ein zumindest teilweise anderer Bereich des Hauptpflanzenstängels dem Untergrund zugewandt ist, im Vergleich zu anderen Kultivierungsarten eine kürzere Wuchshöhe, verringerte Internodienabstände, eine höhere Internodienanzahl, mehr Seitentriebe, eine größere Stängeldicke, mehr Blattbiomasse, mehr Wurzelbiomasse und/oder mehr Anlagen zur Blütenbildung bewirkt. Diese unerwarteten technischen Effekte sind allesamt vorteilhaft zur Steigerung des Pflanzenertrags pro verfügbarer Kultivierungsgrundfläche oder pro verfügbarem Kultivierungsvolumen. Weiterhin ist vorteilhaft, dass der technische Effekt rein physikalisch dadurch erzielt wird, dass in unterschiedlichen Zeiträumen wenigstes teilweise verschiedene Seiten, Seitenflächen oder Bereiche eines Hauptpflanzenstängels dem Untergrund zugewandt werden. Insbesondere werden keine züchterischen Ansätze oder Chemikalien benötigt werden. Außerdem kann das erfindungsgemäße Verfahren zusätzlich zur Nutzung spezifischer Kultivierungsparameter, wie etwa bestimmter Kunstlichtwellenlängenbereiche oder Düngerzusammensetzungen, angewendet werden.

Auf der Grundlage der Erfindung kann eine einfache und schnelle Generierung von Pflanzen mit spezifischem Phänotyp erfolgen, was insgesamt für die kommerzielle Pflanzenproduktion von Interesse ist, vor allem im Bereich des Vertical Farmings. Hierbei eröffnet die Erfindung die Möglichkeit zur effizienten Produktion größerer, bisher für das Vertical Farming wenig bis gar nicht geeigneter Pflanzen. Darüber hinaus bietet die Erfindung außerdem die Möglichkeit, den Standardphänotyp von Pflanzen gezielt anzupassen, wodurch gleichermaßen die Pflanzenqualität und der Pflanzenertrag verbessert werden können. Besonders geeignet ist die Erfindung für die Kultivierung bzw. Produktion lukrativer, unter Standardbedingungen großwüchsiger Medizinalpflanzen, wie z. B. Medizinalcannabis. Darüber hinaus ist die Erfindung auf vorteilhafte Weise bei der Kultivierung bzw. der Produktion von Nahrungsmittelpflanzen oder Zierpflanzen einzusetzen.

Hierbei ist es denkbar, dass das erfindungsgemäße Verfahren, das auf einer geeigneten diskontinuierlichen Rotation von zu kultivierenden Pflanzen um ihre Längs- und/oder eine Querachse der Pflanzen beruht, sowohl auf größeren Anlagen zur Pflanzenaufzucht, die über Förderbänder oder sonstige Fördereinrichtungen verfügen, oder auf Anlagen, wie sie etwa in der Forschung und Entwicklung eingesetzt werden und etwa in Form von Klinostaten ausgeführt sind, realisiert wird.

Im Folgenden wird die Erfindung ohne Beschränkung des allgemeinen Erfindungsgedankens anhand von Ausführungsbeispielen und unter Bezugnahme auf die Figuren näher erläutert. Dabei zeigen:
- Fig. 1:: Schematische Darstellung der verschiedenen Möglichkeiten zur Rotation und Ausrichtung einer geneigt zur Lotrichtung im Schwerefeld der Erde angeordneten Pflanze bei einer Rotation um die Querachse der Pflanze;
- Fig. 2:: Schematische Darstellung der verschiedenen Möglichkeiten zur Rotation und Ausrichtung einer geneigt zur Lotrichtung im Schwerefeld der Erde angeordneten Pflanze bei einer Rotation um die Längsachse der Pflanze;
- Fig. 3:: Vergleich der mittleren Wuchshöhen der Faserhanfsorten "Kompolti" und "Futura 75";
- Fig. 4:: Vergleich der mittleren Internodienanzahl der Faserhanfsorten "Kompolti" und "Futura 75";
- Fig. 5:: Vergleich der Phänotypen der Faserhanfsorten "Kompolti" und "Futura 75" mit und ohne wechselnde Neigung relativ zur Lotrichtung
- Fig. 6:: Schematische Darstellung einer Anlage mit ovaler Förderstrecke zur automatisierten Pflanzenaufzucht bei diskontinuierlicher Rotation der zu kultivierenden Pflanzen;

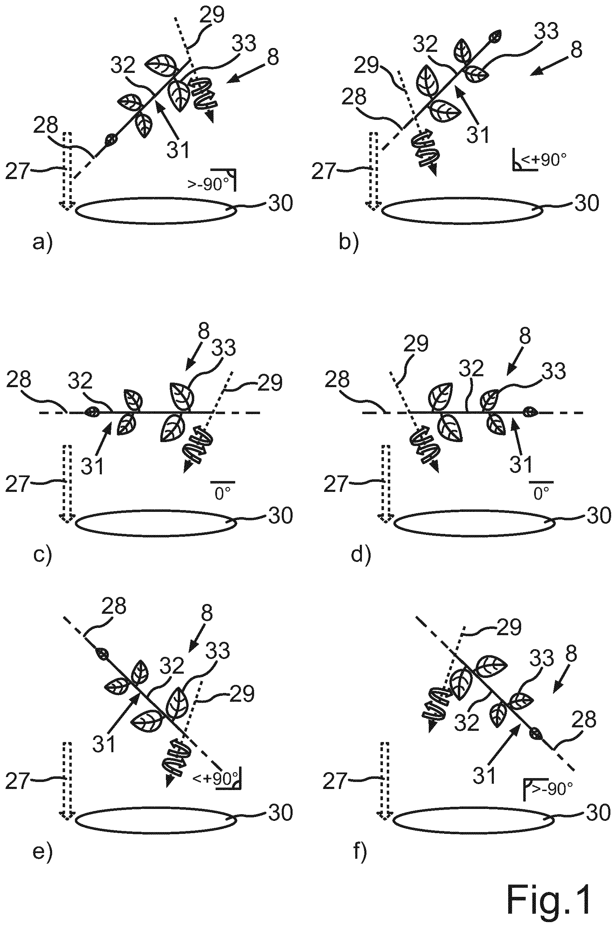

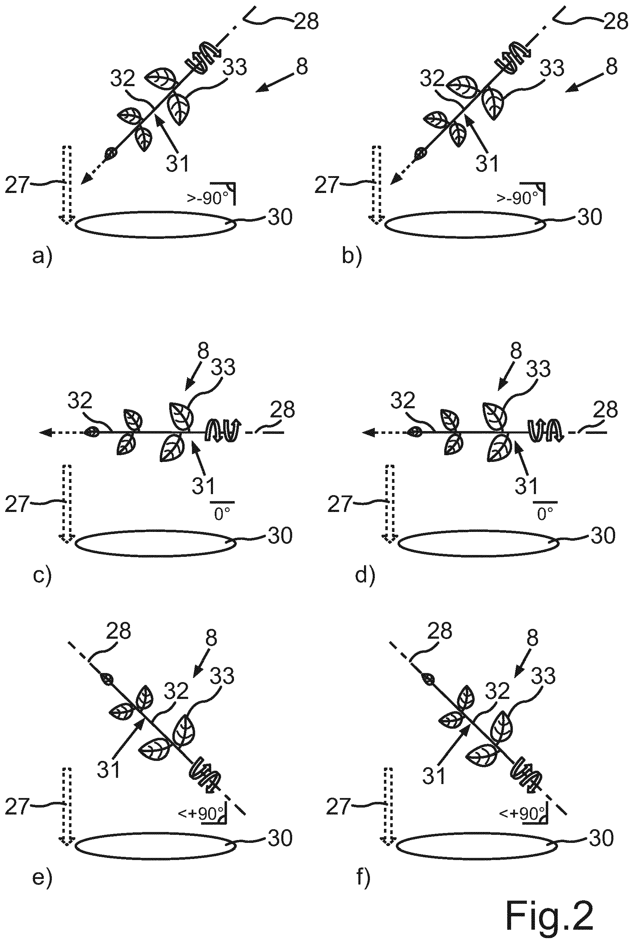

Figuren 1 und 2 zeigen schematische Darstellungen der verschiedenen Rotations- und Ausrichtungsmöglichkeiten einer zu kultivierenden Pflanze 8 im Schwerefeld der Erde, die geneigt zur Lotrichtung 27 im Schwerfeld der Erde angeordnet ist. Die Lotrichtung 27 verläuft hierbei vertikal zum Untergrund 30 am Ort der Aufstellung der Pflanze 8 bzw. der Erdoberfläche in diesem Bereich. Mit Hilfe des schematisch dargestellten Verfahrens zur diskontinuierlichen Rotation einer zu kultivierenden Pflanze 8, die zumindest in Nichtrotationsphasen geneigt zur Lotrichtung 27 angeordnet ist, lässt sich auf vorteilhafte Weise eine spezifische Phänotypmodifikation induzieren.

Die Änderung der Ausrichtung des Hauptpflanzenstängels, insbesondere der in Haupterstreckungsrichtung verlaufenden Längsachse 28 der Pflanze 8, zum Schwerefeld der Erde, kann wahlweise durch Rotation um eine senkrecht oder schräg zur Längsachse verlaufende Querachse 29 der Pflanze 8 erfolgen, wie es in Fig. 1 gezeigt ist, oder durch Rotation um die in Haupterstreckungsrichtung verlaufende Längsachse 28, wie es in Fig. 2 gezeigt ist

Wesentlich ist stets die zwischen zwei Nichtrotationsphasen aufgrund der zwischenzeitlichen Rotation wechselnde Ausrichtung der verschiedener Pflanzenstängelseiten 31 zum Schwerefeld der Erde, wobei unterschiedliche Seitenbereiche bzw. Seitenflächenbereiche des Hauptstängels 32 sowie die auf der entsprechenden Seite 31 angeordneten Pflanzenstängel 32 dem Untergrund 30 zugewandt sind.

Bei der in Fig. 1 gezeigten Ausführungsform wird die zu kultivierende Pflanze 8, die gemäß den Teilansichten a) bis f) jeweils unterschiedlich gegenüber der Lotrichtung 27 geneigt ist, um ihre Querachse 29, die senkrecht zur Längsachse 28 der Pflanze 8 angeordnet ist, rotiert Generell ist es in diesem Zusammenhang auch denkbar, dass die Querachse 29 schräg zur Längsachse 28 verläuft. Hierbei werden jeweils die gegenüberliegenden Pflanzenstängelseiten 31 bzw. Seitenbereiche des Hauptpflanzenstängels 32 abwechselnd dem Untergrund zugewandt.

Demgegenüber zeigt Fig. 2 eine Ausführungsform des erfindungsgemäßen Verfahrens, bei dem die zu kultivierenden Pflanzen 8, die gemäß den Teilansichten a) bis f) jeweils unterschiedlich gegenüber der Lotrichtung 27 geneigt sind, während der zwischen zwei Nichtrotationsphasen gelegenen Rotationsphasen um die in Haupterstreckungsrichtung der Pflanzen verlaufende Längsachse 28 rotiert werden.

Bei dieser Ausführungsform hängt die Ausrichtung der Pflanzenstängelseiten 31 bzw. des jeweiligen Seitenbereichs des Hauptpflanzenstängels 33 von dem jeweiligen Rotationswinkel ab, um den die Pflanze 8 während einer Rotationsphase gedreht wurde.

Die beispielhaft dargestellten Pflanzenausrichtungen zeigen den zur Induktion spezifischer Phänotypmodifikationen wirksamen Winkelbereich, bei dem für den Winkel α gilt: -90° < α < 90°. Innerhalb dieses Winkelbereichs wirkt die Schwerkraft entlang des Schwerkraftvektors zumindest annähernd seitlich auf die Pflanze 8 und ihre Pflanzenstängel. Die größte seitliche Kraft Schwerkraft wirkt im Fall, dass α= 0° gewählt ist, die Längsachse 28 der zu kultivierenden Pflanze 8 somit senkrecht zur Lotrichtung, in der von Längsachse 28 und Lotrichtung 27 aufgespannten Ebene ausgerichtet ist, wie es jeweils in den Figuren 1c), 1d), 2c) und 2d) gezeigt ist

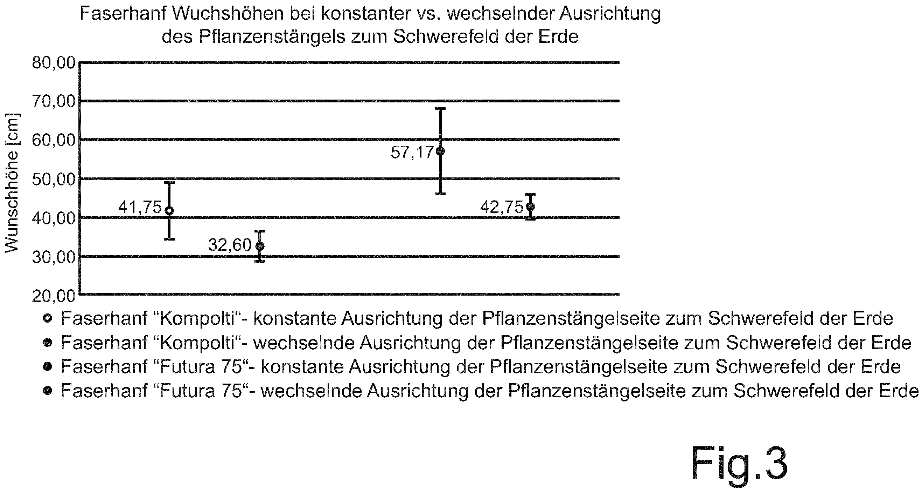

Fig. 3 zeigt in einer grafischen Darstellung den Vergleich der mittleren Wuchshöhen der Faserhanfsorten "Kompolti" und "Futura 75" nach einer Kultivierungsdauer von 36 Tagen ohne oder mit wechselnder Ausrichtung der Pflanzenstängelseiten relativ zum Untergrund bzw. der Erdoberfläche bei ansonsten gleichen Kultivierungsbedingungen. Durch die wechselnde Ausrichtung der zu kultivierenden Pflanzen relativ zur Lotrichtung, in der die Schwerkraft wirkt, reduziert sich die Wuchshöhe für Kompolti um 21,92 % und für Futura 75 um 25,22 %. Die Fehlerbalken stellen die Standardabweichung dar (+- 1 SD).

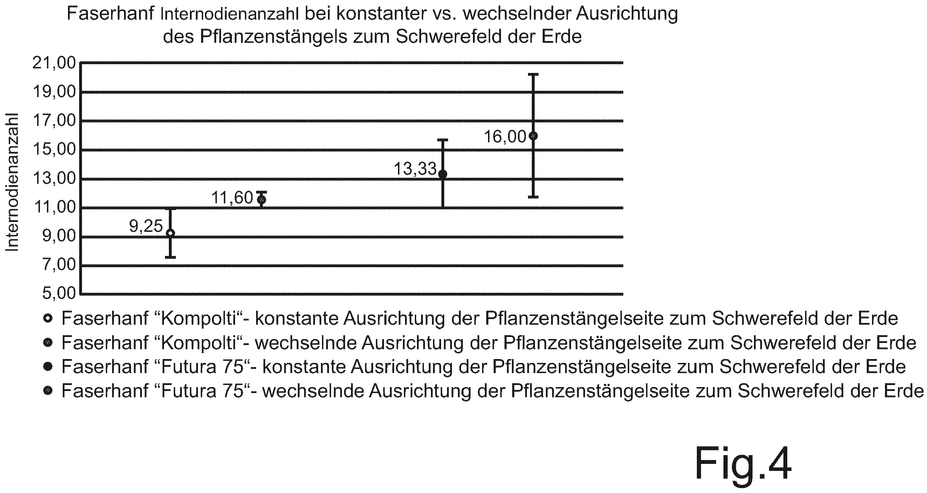

Fig. 4 zeigt in einer grafischen Darstellung den Vergleich der mittleren Internodienanzahl der Faserhanfsorten "Kompolti" und "Futura 75" nach einer Kultivierungsdauer von 36 Tagen ohne oder mit wechselnder Ausrichtung der Pflanzenstängelseiten relativ zum Untergrund bzw. der Erdoberfläche bei ansonsten gleichen Kultivierungsbedingungen. Durch die wechselnde Ausrichtung der zu kultivierenden Pflanzen relativ zur Lotrichtung, in der die Schwerkraft wirkt, erhöht sich die Internodienanzahl für Kompolti um 25,41 % und für Futura 75 um 20 %. Die Fehlerbalken stellen die Standardabweichung dar (+- 1 SD).

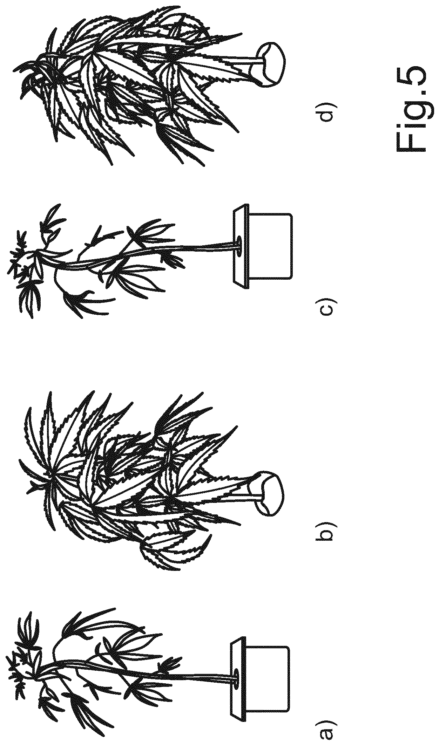

Fig. 5 zeigt in speziellen Bildern einen Vergleich der Phänotypen der Faserhanfsorten "Kompolti" und "Futura 75" nach einer Kultivierungsdauer von 36 Tagen ohne oder mit wechselnder Ausrichtung der Pflanzenstängelseiten zum Schwerefeld der Erde bei ansonsten gleichen Kultivierungsbedingungen. Hierbei zeigen die Teilansichten a) und b) die Faserhanfsorte "Kompolti" in der Teilansicht a), ohne dass die Ausrichtung der Längsachse 28 der Pflanze zur Lotrichtung 27 geändert wurde und in Teilansicht b), nachdem die Ausrichtung der Pflanzenstängelseiten zum Untergrund 30 während der Kultivierung verändert wurde. Ergänzend zeigen die Teilansichten c) und d) die Kultivierung der Faserhanfsorte "Futura 75" in Teilansicht c) ohne und in Teilansicht d) mit während der Kultivierung gewechselter Ausrichtung der Pflanzenstängelseiten zum Untergrund 30. Eine wechselnde Ausrichtung der Pflanzenstängelseiten zum Untergrund, wodurch in aufeinanderfolgenden Nichtrotationsphasen unterschiedliche Seitenbereiche eines Hauptpflanzenstängels 32 bzw. Pflanzenstängelseiten 31 dem Untergrund zugewandt werden, bewirkt eine kürzere Wuchshöhe, eine höhere Internodienanzahl mit verringerten Internodienabständen, mehr Seitentriebe, mehr Blattbiomasse, eine größere Stängeldicke und mehr Anlagen zur Blütenbildung.

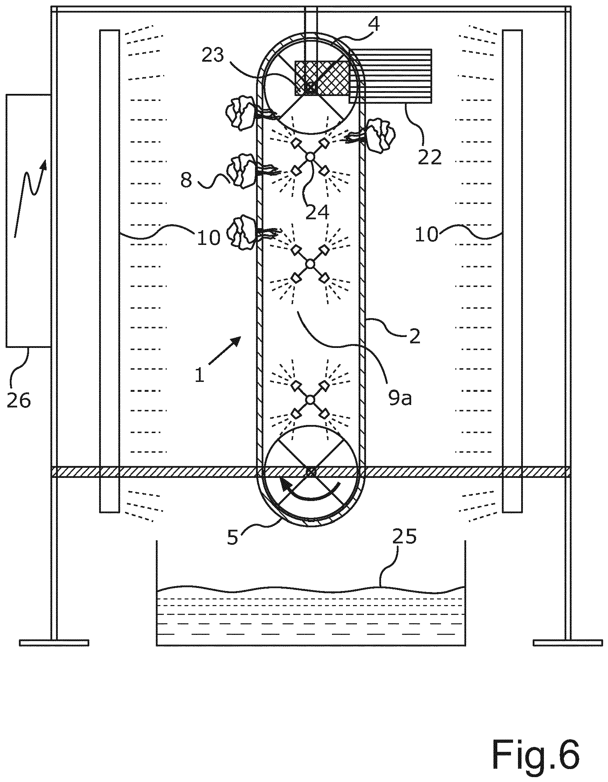

Figur 6 zeigt eine spezielle Anlage zur Kultivierung, bei der die Pflanzen 8 auf einem Förderband 2 fixiert sind und diskontinuierlich auf einer geschlossenen Ovalbahn gefördert werden. Denkbar ist auch die Bewegung auf einer Kreisbahn. Wahlweise lassen sich eine oder eine Mehrzahl derartiger Anlagen gleichzeitig betreiben. Wesentlich ist wiederum, dass die zu kultivierenden Pflanzen 8 diskontinuierlich bewegt werden, sodass gemäß dem in Figur 3 gezeigten Ausführungsbeispiel in den Rotationsphasen eine Rotation um die Querachse 29 der Pflanzen 8 erfolgt

Die in Figur 6 gezeigte Anlage lässt sich im Weiteren flexibel konfigurieren. Gemäß dem hier gezeigten Ausführungsbeispiel sind die diskontinuierlich rotierten Pflanzen derart im Förderband fixiert, dass ihr Wurzelwerk frei in einen Bereich unterhalb des Förderbandes hineinragt. Hier werden die Pflanzen mit einer Nährmediumversorgung 9a aeroponische mit Nährmedium versorgt. Alternativ oder in Ergänzung ist auch eine hydroponische Nährmediumversorgung 9b denkbar. Im Weitern sind außerhalb der Anlage Leuchteinheiten 10 vorgesehen, die eine bedarfsgerechte Bestrahlung der aufzuziehenden Pflanzen, insbesondere des Blattwerks ermöglichen.

Vorteilhaft an der gezeigten Anlage ist, dass auch größere Pflanzen problemlos rotiert und hierfür am oberen und unteren Umlenkpunkt umgelenkt werden können.

Generell lassen sich mit der in Figur 6 gezeigten Anlage das erfindungsgemäße Verfahren ohne oder mit den zuvor beschriebenen Ausführungsformen realisieren. So ist es etwa denkbar, die Pflanzen 8 auf dem Förderband 2 zu fixieren und ausschließlich diskontinuierlich um ihre Querachse 29 zu rotieren oder aber alternativ oder in Ergänzung eine Rotation um deren Längsachse 28 zu initiieren.

Eine derartige Pflanzenaufzuchtanlage eignet sich ganz besonders für die Kultivierung von Medizinalpflanzen, Futterpflanzen, Zierpflanzen und/oder verholzende Pflanzen. Besonders geeignet ist eine deratrige Anlage für die Aufzucht von zur Familie der Cannabaceae gehörenden Medizinalpflanzen durch Ausnutzung des erfindungsgemäßen Verfahrens.

Ebenso lassen sich Nahrungspflanzen wie Kräuter, Blattgemüse und/oder Fruchtpflanzen inklusive Körnerleguminosen mit einer derartigen Anlage im Wege des erfindungsgemäßen Verfahrens kultivieren. Eine vorteilhafte Ernte ist möglich, sofern die Ernte der Pflanzen oder Früchte im Bereich des unteren Umkehrpunktes, insbesondere mit Hilfe einer automatisiert arbeitenden Erntemaschine, erfolgt

### Bezugszeichenliste

- 1: Förderstrecke
- 2: Förderband
- 3: Aufnahme
- 4: oberer Umlenkpunkt
- 5: unterer Umlenkpunkt
- 6: vertikaler Streckenabschnitt
- 7: horizontaler Streckenabschnitt
- 8: Pflanze
- 9: Nährstoffversorgungseinheit
- 9a: aeroponische Nährstoffversorgungseinheit
- 9b: hydroponische Nährstoffversorgungseinheit
- 10: Beleuchtungseinheit
- 11: Beschattungsphase
- 12: Bestückungseinheit
- 13: Ernteeinheit
- 14: Reinigungs- und Sterilisationseinheit
- 15: Förderkette
- 16: Transportband
- 17: elastische Verbindungselemente
- 18: Trägermaterial
- 19: Bereich unterhalb des Förderbandes
- 20: Bereich oberhalb des Förderbandes
- 21: Verstelleinheit
- 22: Elektromotor
- 23: Schneckengetriebe
- 24: Sprühdüse
- 25: Nähstoffmediumtank
- 26: zentrale Steuereinheit
- 27: Lotrichtung
- 28: Längsachse
- 29: Querachse
- 30: Untergrund
- 31: Pflanzenstängelseite
- 32: Hauptstängel
- 33: Pflanzenstängel

## Patentansprüche

1. Verfahren zur Kultivierung wenigstens einer Pflanze, die während einer Wachstumsphase zumindest zeitweise bewegt wird,
**dadurch gekennzeichnet, dass** die Pflanze diskontinuierlich rotiert wird, wobei die Pflanze während einer Rotationsphase um eine in Haupterstreckungsrichtung verlaufende Längsachse der Pflanze und/oder um eine senkrecht oder schräg zur Längsachse verlaufende Querachse rotiert wird und die Pflanze in einer Nichtrotationsphase, in der die Rotationsgeschwindigkeit wenigstens zeitweise auf 0 (Null) verringert wird, zumindest zeitweise derart angeordnet wird, dass die Längsachse der Pflanze gegenüber einer Lotrichtung am Ort der Pflanze und in einer Ebene, die von der Lotrichtung und der Längsachse aufgespannt wird, geneigt ist.

2. Verfahren nach Anspruch 1,
**dadurch gekennzeichnet, dass** zumindest zeitweise die Nichtrotationsphasen mindestens so lang sind wie die Rotationsphasen.

3. Verfahren nach einem der vorangehenden Ansprüche,
**dadurch gekennzeichnet, dass** eine erste Seite eines in der Haupterstreckungsrichtung der Pflanze verlaufenden Hauptstängels in zumindest zwei Nichtrotationsphasen gleich relativ zur Lotrichtung ausgerichtet wird.

4. Verfahren nach einem der vorangehenden Ansprüche,
**dadurch gekennzeichnet, dass** eine erste und eine zweite Seite eines in der Haupterstreckungsrichtung der Pflanze verlaufenden Hauptstängels, die gegenüberliegend am Hauptpflanzenstängel angeordnet sind, derart rotiert werden, dass in einer zweiten Nichtrotationsphase, die unterbrochen von einer Rotationsphase einer ersten Rotationsphase folgt, die erste Seite die Position einnimmt, die die zweite Seite in der ersten Nichtrotationsphase innehatte.

5. Verfahren nach einem der vorangehenden Ansprüche,
**dadurch gekennzeichnet, dass** die Pflanze zumindest zeitweise während der Nichtrotationsphasen mit ihrer Längsachse in einem Winkel α zur Lotrichtung angeordnet wird, für den -90° < α < 90° gilt.

6. Verfahren nach einem der vorangehenden Ansprüche,
**dadurch gekennzeichnet, dass** die Pflanze zumindest zeitweise während der Nichtrotationsphasen mit ihrer Haupterstreckungsrichtung senkrecht zur Lotrichtung angeordnet wird.

7. Verfahren nach einem der vorangehenden Ansprüche,
**dadurch gekennzeichnet, dass** eine Nichtrotationsdauer zumindest teilweise 10 bis 200 s dauert

8. Verfahren nach einem der vorangehenden Ansprüche,
**dadurch gekennzeichnet, dass** mindestens ein Pflanzenphänotyp der Pflanze im Vergleich zum Wachstum einer während des Wachstums nicht diskontinuierlich rotierten Pflanze induziert wird, wobei der Pflanzenphänotyp aus einer Gruppe von Phänotypen ausgewählt ist, zu der kürzere Wuchshöhe bei überwiegend geradem Stängel, kürzere Wuchshöhe bei wellenförmigem Stängel, verringerter Internodienabstand, höhere Internodienanzahl, mehr Seitentriebe, größere Stängeldicke, mehr Blattbiomasse und mehr Wurzelbiomasse gehören.

9. Verfahren nach einem der vorangehenden Ansprüche,
**dadurch gekennzeichnet, dass** eine Medizinalpflanze, eine Nahrungspflanze, eine Futterpflanze, eine Zierpflanze und/oder eine verholzende Pflanze kultiviert wird.

10. Verfahren nach einem der vorangehenden Ansprüche,
**dadurch gekennzeichnet, dass** eine zur Familie der Cannabaceae gehörende Medizinalpflanze kultiviert wird.

11. Verfahren nach einem der vorangehenden Ansprüche,
**dadurch gekennzeichnet, dass** die Pflanze wenigstens zeitweise mit einem Förderband oder einem Klinostat bewegt wird.

12. Vorrichtung zur Durchführung des Verfahrens nach einem der vorangehenden Ansprüche mit einer Befestigungsvorrichtung zur lösbaren Befestigung der zu kultivierenden Pflanze, einer Antriebseinheit, die wenigstens mittelbar mit der Befestigungsvorrichtung zur Initiierung einer Bewegung der Befestigungsvorrichtung verbunden ist

13. Vorrichtung nach Anspruch 12,
**dadurch gekennzeichnet, dass** die Befestigungsrichtung linear verfahren und/oder rotiert wird.

14. Vorrichtung nach Anspruch 12 oder 13,
**dadurch gekennzeichnet, dass** die Befestigungsvorrichtung und/oder die Antriebseinheit ausgeführt sind, um die zu kultivierende Pflanze in wenigstens einer Ebene zu bewegen.

15. Vorrichtung nach einem der Ansprüche 12 bis 14,
**dadurch gekennzeichnet, dass** eine Nährmediumversorgung, um die zu kultivierende Pflanze zumindest teilweise mit Nährmedium zu versorgen, eine Beleuchtungsquelle, um die zu kultivierende Pflanze zumindest zeitweise zu bestrahlen, und/oder eine Klimatisiereinrichtung, um eine die Pflanze umgebende Atmosphäre bedarfsgerecht einzustellen, vorgesehen ist.
